# NOUVEAU FASCICULE DE BREVET EUROPEEN

(11) **EP 0 785 153 B2**
(45) Date de publication et mention de la décision concernant l'opposition: **08.05.2002**
(45) Mention de la délivrance du brevet: 15.07.1998
(21) Numéro de dépôt: 96400152.3
(22) Date de dépôt: 22.01.1996
(51) Int. Cl.: B65G 19/28

(54) **Bac pour le convoyage de produits quelconques**
Schale zur Förderung von beliebigen Produkten
Tray for conveying any type of product

(43) Date de publication de la demande: 23.07.1997
(73) Titulaire: MANOIR INDUSTRIES, F-75008 Paris (FR)
(72) Inventeur: Freudl, Günther, F-57880 Guerting (FR); Maraldi, François, F-57070 Metz (FR)
(74) Mandataire: Bentz, Jean-Paul

(56) Documents cités:
- EP-A- 0 525 926
- DE-A- 3 235 191
- DE-B- 1 073 386
- DE-B- 1 223 299
- DE-C- 4 037 659
- FR-A- 1 391 175
- GB-A- 2 241 482
- US-A- 2 818 164

## Description

La présente invention concerne, de façon générale, un bac pour le convoyage de produits quelconques, tels que notamment des produits extraits dans les mines ou les carrières.

Plus précisément, l'invention concerne un bac destiné à un tel convoyage et du type comprenant une tôle de fond ou médiane sur deux côtés opposés de laquelle sont fixés par soudage des éléments latéraux définissant un compartiment supérieur et un compartiment inférieur, chaque élément latéral étant constitué de deux profilés sensiblement en forme de U respectivement soudés sur le dessus et sur le dessous de la tôle de fond ou médiane, et ladite tôle de fond ou médiane s'étendant à l'extérieur des profilés pour former sur deux côtés opposés deux parties débordantes sur lesquelles sont soudés, aux quatre coins de cette tôle, des plots permettant la liaison d'un bac avec d'autres bacs.

Un bac de ce type est par exemple décrit dans le document de brevet DE 3 235 191.

Dans les deux compartiments supérieur et inférieur passe au moins une chaîne sans fin sur laquelle sont fixées à intervalles réguliers ou non des râclettes permettant le transport des produits extraits et tombent dans le compartiment supérieur.

D'autres documents, tels que les documents de brevets GB-2 241 482, GB-2 160 489, ou EP 0 525 926, décrivent des bacs plus ou moins approchants, destinés à la même application.

Les éléments latéraux subissent des usures très prononcées en raison du coulissement des râclettes dans ces éléments, de sorte que ces éléments latéraux en entier doivent être remplacés ou bien les bacs doivent être mis au rebut. Il convient encore d'observer que les coûts de fabrication des bacs antérieurs étaient relativement élevés, et leur durée de vie était relativement limitée.

Aussi, la présente invention a pour but de pallier notamment les inconvénients ci-dessus en proposant un bac de convoyeur perfectionné et qui peut être qualifié de bac universel en ce sens que ses éléments de structure peuvent être variables et choisis à volonté en fonction des conditions d'utilisation, étant entendu qu'un tel bac peut avoir une durée de vie très longue du fait de ses caractéristiques mécaniques élevées obtenues par une structure qui sera toujours fonction de l'utilisation recherchée. Il faut aussi noter que les bacs selon cette invention pourront être réalisés suivant une cadence de production relativement élevée et par conséquent pour un coût de fabrication relativement faible en raison du fait que sa conception est simple.

A cette fin, le bac de l'invention, par ailleurs conforme à la définition générique qu'en donne le préambule ci-dessus, est essentiellement caractérisé en ce que lesdits plots sont emboîtés sur lesdites parties débordantes de la tôle de fond ou médiane avant d'y être soudés aux coins de cette tôle, et en ce que, dans les extrémités de ses parties débordantes s'étendant à l'extérieur des profilés, la tôle de fond ou médiane présente des encoches ou analogues, à bords bombés, coopérant, à l'extérieur des profilés et en dehors du passage, générateur d'usure, des produits extraits, avec des encoches correspondantes de la tôle de fond ou médiane d'au moins un bac adjacent, pour encaisser les efforts résultant des déplacements relatifs des bacs adjacents reliés entre eux.

Grâce à cet agencement, non seulement la liaison des bords opposés de la tôle, située à l'extérieur de la ligne de soudage des profilés en U, ne risque aucunement d'être affectée par l'abrasion et/ou l'usure des produits extraits tombant dans le compartiment supérieur du bac défini par la tôle de fond et les profilés en U supérieurs, mais les efforts résultant des déplacements relatifs des bacs sont transmis d'un bac à l'autre par les tôles de fond.

Enfin, les plots de liaison présentent avantageusement des faces offrant aux quatre profilés en U une assise de positionnement avant leur soudage sur la tôle de fond ou médiane, et les quatre profilés sont soudés sur ces plots.

Mais d'autres avantages et caractéristiques de l'invention apparaîtront mieux dans la description détaillée qui suit et se réfère aux dessins annexés, donnés uniquement à titre d'exemple, et dans lesquels :
La figure 1 est une vue en perspective d'un bac conforme à la présente invention.
La figure 2 est une vue en coupe suivant la ligne II-II de la figure 1.
La figure 3 est une vue en perspective et en bout, à échelle agrandie, d'une paire de profilés en U fixés par soudage sur un côté de la tôle de fond.
La figure 4 est une vue en coupe suivant la ligne IV-IV de la figure 3.
La figure 5 illustre en perspective la tôle de fond du bac et comment s'effectue le positionnement d'un profilé en U sur cette tôle de fond avant soudage.
La figure 6 est une demi-vue schématique en plan de dessus et partielle de trois bacs successivement reliés.

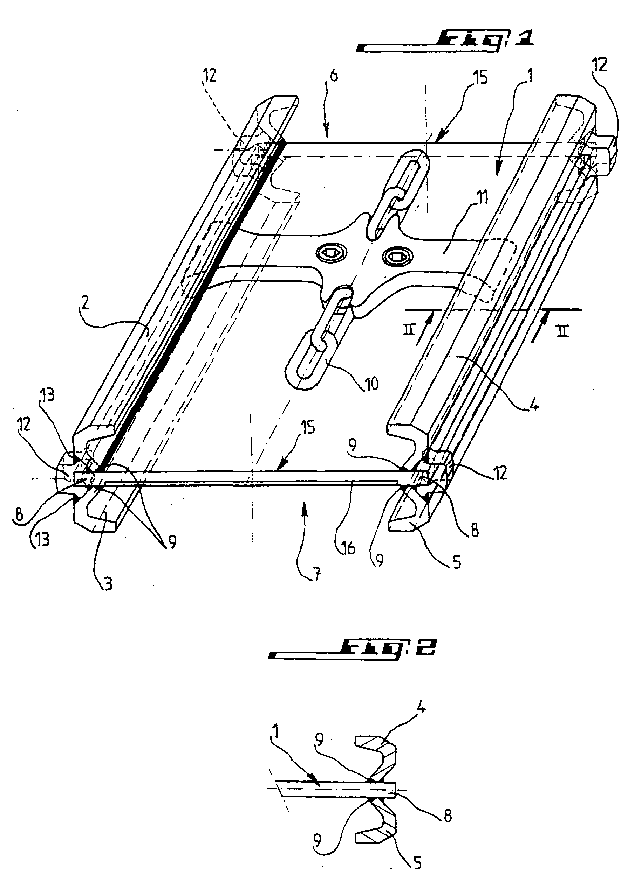

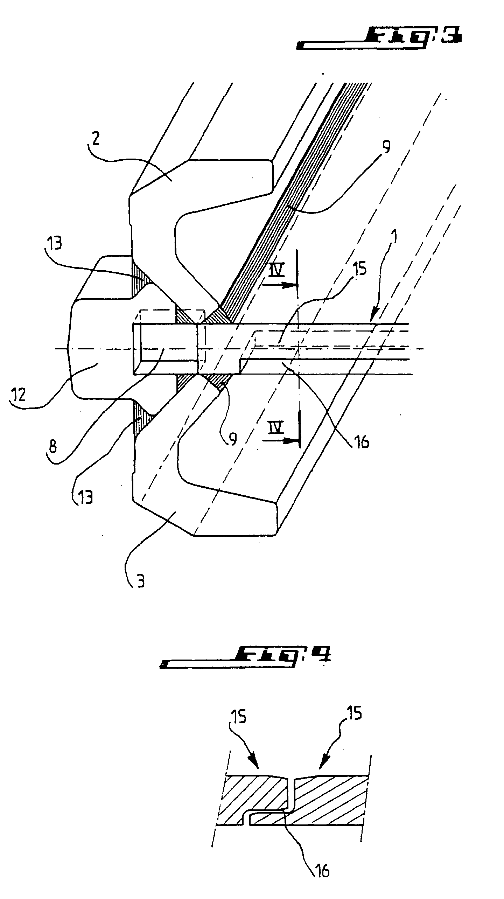

Suivant un exemple de réalisation, et en se reportant plus particulièrement aux figures 1 à 4, on voit qu'un bac haute performance selon cette invention comprend essentiellement une tôle de fond ou médiane 1 munie d'éléments latéraux se composant chacun de deux profilés en forme de U repérés respectivement en 2 et 3 pour un côté, et en 4 et 5 pour l'autre côté.

Plus précisément, les profilés 2 et 4 en forme de U sont soudés sur le dessus de la tôle médiane 1 pour former avec elle un compartiment supérieur 6, tandis que les profilés en U 3 et 5 sont soudés sur le dessous de la tôle 1 pour former avec elle un compartiment inférieur 7.

Chaque paire de profilés en U 2-3 et 4-5 est soudée sur la tôle 1, de telle façon que ladite tôle s'étende vers l'extérieur des profilés pour former sur deux côtés opposés un bord ou une partie en saillie 8 qui s'étend donc au-delà de la ligne de soudure 9 des profilés 2, 3,4 et 5 sur la tôle médiane ou de fond, comme on le voit bien sur la figures 1, 2 et 3, et cela de façon à permettre notamment la liaison d'un bac avec d'autres bacs, comme on le décrira ultérieurement en détail.

D'une manière générale, une pluralité de bacs identiques tels que celui visible sur la figure 1 sont reliés les uns à la suite des autres et reposent sur par exemple le sol d'une galerie de mines pour permettre la réception et le transport des produits extraits. Ce transport est assuré par une chaîne sans fin visible partiellement en 10 sur la figure 1 et équipée d'une succession de râclettes 11 coulissant par leurs extrémités dans les profilés U 2, 4 en regard formant avec la tôle médiane 1 le compartiment supérieur 6. On voit sur la figure 1 le brin supérieur de la chaîne 10 dans le compartiment supérieur 6, étant entendu que le brin inférieur passe dans le compartiment inférieur 7. La chaîne 10 est entraînée en rotation par un groupe moto-réducteur approprié non représenté et ne faisant pas partie de l'invention.

On comprend donc déjà de la description qui précède que l'épaisseur de la tôle de fond 1 pourra être quelconque et ne sera aucunement fonction de la forme des éléments latéraux constitués par les paires de profilés 2, 3 et 4, 5, puisque lesdits profilés seront rapportés et fixés par soudage respectivement sur le dessus et sur le dessous de la tôle 1. Autrement dit la tôle 1 traverse de façon continue lesdites paires de profilés, de façon à présenter une partie ou un bord 8 saillent vers l'extérieur.

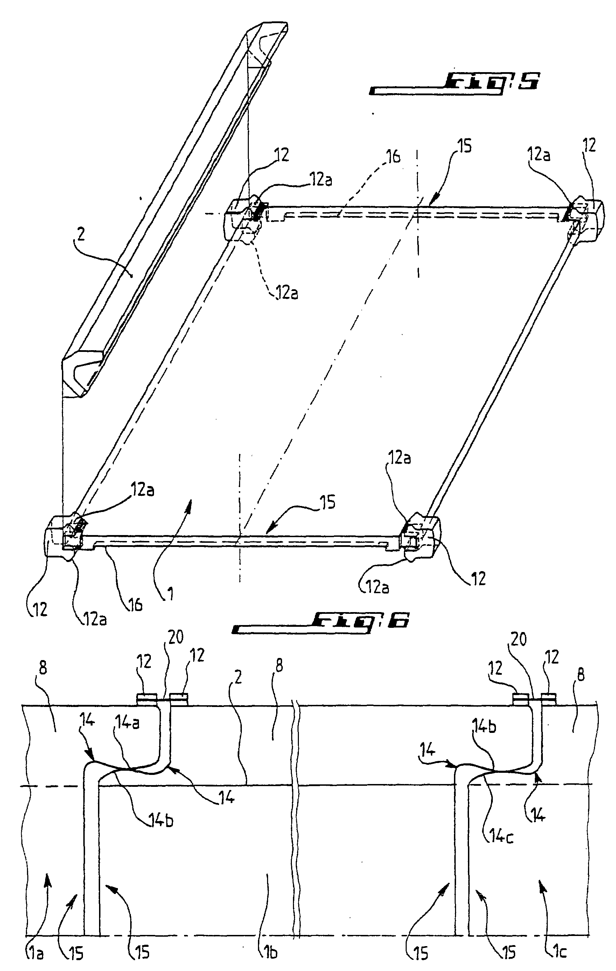

Sur les deux parties débordantes 8 et sensiblement aux quatre coins de la tôle de fond ou médiane 1, comme on le voit bien sur les figures 1 et 5, sont emboîtés et fixés par soudage de préférence des plots repérés en 12. Ces plots 12 comportent chacun deux faces inclinées 12a formant avantageusement siège ou assise de positionnement des quatre profilés en U 2, 3, 4, 5 sur la tôle 1 (voir figure 5) avant leur soudage sur ladite tôle et également sur les plots 12, comme on le voit en 13 sur les figures 1 et 3.

On se reportera maintenant à la figure 6 illustrant schématiquement en vue de dessus, et suivant une demivue, trois bacs successifs dont on voit respectivement la tôle médiane en 1a, 1b, 1c définissant avec les profilés en U supérieurs 2, 4 dont un seul est visible, à savoir le profilé 2, une succession de compartiments supérieurs 6 formant un couloir de transport des produits extraits grâce aux râclettes 11. Chaque tôle de fond 1a, 1b, 1c est munie de plots 12 comme précédemment décrit et permettant la liaison de deux bacs adjacents à l'aide d'un anneau ou analogue déformable 20 passant autour de deux plots 12 appartenant respectivement à deux bacs ou tôles 1 adjacentes.

On voit que la partie extérieurement débordante 8 de la tôle 1 de chaque bac comporte à ses extrémités des encoches de forme coopérante 14. Ces encoches 14 comportent des bords bombés coopérants comme on l'a montré en 14a, 14b et 14c, ces bords étant constitués par l'épaisseur de la tôle. Ainsi, lors des déplacements relatifs des bacs, tant dans le plan vertical que dans le plan horizontal (ripage des bacs), les bords bombés et coopérants 14a, 14b et 14c pourront avantageusement encaisser les efforts résultant de tous les déplacements relatifs, et cela sans aucun risque d'encrassage par les produits extraits puisque lesdits bords coopérants sont situés à l'extérieur du compartiment ou couloir recevant les produits extraits.

En d'autres termes, on comprend de ce qui précède que les liaisons mécaniques des bacs sont réalisées uniquement au niveau de la tôle médiane 1, et plus particulièrement au niveau des parties débordantes et opposées 8 de cette tôle, de sorte que les profilés 2, 3, 4 et 5 servent-uniquement de parois pour contenir le produit extrait et pour guider les râclettes 11. C'est dire que la ligne de force des efforts de ripage pour déplacer la ligne de bacs ne passe que par la tôle médiane 1 et non par les profilés en U 2, 3, 4 et 5 qui, de ce fait, ne risquent pas d'être endommagés.

Revenant aux figures 1, 3 et 5, et en se reportant tout particulièrement à la figure 4, on voit que la tôle de fond 1 comporte sur ses deux bords 15 opposés et orthogonaux aux bords débordants 8 un embrèvement 16, de sorte que, comme cela est connu en soi, il y a chevauchement des bords 15 d'un bac avec les bords 15 des bacs adjacents pour que le couloir de transport formé par la succession de bacs soit situé dans un plan sensiblement horizontal.

On a donc réalisé suivant l'invention un bac de convoyeur haute performance qui peut supporter des forts débits, qui est très compact et très résistant à l'usure et dont la conception mécanique demeure simple.

En outre, le bac pourra être mis en service de manière à utiliser le couloir supérieur comme couloir inférieur et inversement.

Il convient encore d'insister sur le fait que la jonction par emboîtement des bacs est effectuée au niveau de la tôle médiane ou de fond et des liaisons du bac, et cela en dehors du couloir par où passe le produit et donc sans aucun risque d'usure.

On comprend aussi qu'il est aisé, grâce à l'invention, de partir de profilés identiques et de formes relativement simples pour réaliser des bacs de hauteur, largeur et longueur différentes selon l'utilisation et les nécessités du marché.

A cet égard, on observera que les profilés en U 2,4 soudés sur le dessus de la tôle médiane 1 et définissant le compartiment ou couloir supérieur pourront avoir avantageusement une épaisseur supérieure à celle des profilés en U 3, 5 soudés sur le dessous de la tôle 1.

Enfin, la fabrication de différents modèles de bacs selon l'invention sera rendue moins coûteuse par le fait que les profilés en U pourront être identiques quant à leur section pour des bacs de différentes hauteurs et largeurs (largeur et épaisseur de la tôle de fond 1 différentes).

Ces bacs pourront être utilisés pour des convoyeurs à chaînes et râclettes de types divers, dans des mines souterraines pour effectuer le transport, l'abattage, l'alimentation des silos etc..., ou encore dans des carrières à ciel ouvert, des cimenteries etc... .

## Revendications

1. Bac pour le convoyage de produits quelconques, tels que par exemple les produits extraits dans les mines ou les carrières, et du type comprenant une tôle de fond ou médiane (1) sur deux côtés opposés de laquelle sont fixés par soudage des éléments latéraux définissant un compartiment supérieur (6) et un compartiment inférieur (7), chaque élément latéral étant constitué de deux profilés (2, 3 ; 4, 5) sensiblement en forme de U respectivement soudés sur le dessus et sur le dessous de la tôle de fond ou médiane, et ladite tôle de fond ou médiane (1) s'étendant à l'extérieur des profilés (2, 3, 4, 5) pour former sur deux côtés opposés deux parties débordantes (8) sur lesquelles sont soudés, aux quatre coins de cette tôle, des plots (12) permettant la liaison d'un bac avec d'autres bacs, **caractérisé en ce que** lesdits plots (12) sont emboîtés sur lesdites parties débordantes (8) de la tôle de fond ou médiane (1) avant d'y être soudés aux coins de cette tôle, et **en ce que**, dans les extrémités des parties débordantes (8) s'étendant à l'extérieur des profilés (2, 3, 4, 5), la tôle de fond ou médiane (1) présente des encoches ou analogues (14) à bords bombés coopérant, à l'extérieur des profilés (2, 3, 4, 5) et en dehors du passage, générateur d'usure, des produits extraits, avec des encoches (14) correspondantes de la tôle de fond ou médiane (1) d'au moins un bac adjacent, pour encaisser les efforts résultant des déplacements relatifs des bacs adjacents reliés entre eux.

2. Bac selon la revendication 1, **caractérisé en ce que** les plots précités (12) présentent des faces (12a) offrant aux quatre profilés en U (2, 3, 4, 5) une assise de positionnement avant leur soudage sur la tôle de fond ou médiane (1), et **en ce que** les quatre profilés en U (2, 3, 4, 5) sont soudés sur ces plots.

## Patentansprüche

1. Behälter für den Transport von beliebigen Produkten, wie zum Beispiel aus Minen oder Steinbrüchen ausgetragener Produkte, und von der Art, umfassend ein Boden- oder Mittelblech (1) auf zwei gegenüberliegenden Seiten, auf dem durch Verschweißen seitliche Elemente befestigt sind, die ein oberes Fach (6) und ein unteres Fach (7) definieren, wobei jedes seitliche Element aus zwei Profilen (2, 3; 4, 5) in deutlicher U-Form gebildet wird, die jeweils auf der Ober- und der Unterseite des Boden- oder Mittelblechs aufgeschweißt sind, und wobei das besagte Boden- oder Mittelblech (1) sich an der Außenseite der Profile (2, 3, 4, 5) erstreckt, um auf zwei gegenüberliegenden Seiten zwei überhängende Teile (8) zu bilden, auf denen an den vier Ecken dieses Blechs Ansatzstücke (12) aufgeschweißt sind, die die Verbindung eines Behälters mit anderen Behältern erlauben, **dadurch gekennzeichnet, dass** die besagten Ansatzstücke (12) auf den besagten überhängenden Teilen (8) des Boden- oder Mittelblechs (1) eingreifen, bevor sie dort an den Ecken dieses Blechs verschweißt werden, und dass in den Enden der sich an der Außenseite der Profile (2, 3, 4, 5) erstreckenden überhäng enden Teile (8) das Boden- oder Mittelblech (1) Einkerbungen oder dergleichen(14) mit gewölbten Rändern aufweist, die an der Außenseite der Profile (2, 3, 4, 5) und außerhalb des Verschleiß erzeugenden Durchgangs der ausgetragenen Produkte mit den entsprechenden Einkerbungen (14) des Boden- oder Mittelblechs (1) wenigstens mit einem anliegenden Behälter zusammenwirken, um die aus den relativen Verschiebungen der untereinander verbundenen anliegenden Behälter resultierenden Beanspruchungen aufzufangen.

2. Behälter gemäß Anspruch 1, **dadurch gekennzeichnet, dass** die vorgenannten Ansatzstücke (12) Seiten (12a) aufweisen, die den vier Profilen in U-Form (2, 3, 4, 5) einen Positionierungssitz vor ihrem Verschweißen auf dem Boden- oder Mittelblech (1) bieten, und dass die vier Profile in U-Form (2, 3, 4, 5) auf diesen Ansatzstücken verschweißt sind.

## Claims

1. Container for transporting all types of products, such as for example products extracted from mines or quarries, said container being of the type including a median or bottom plate (1), lateral elements being welded on two opposing sides of said plate and defining one upper compartment (6) and one lower compartment (7), each lateral element being constituted by two approximately U-shaped profiles (2, 3 ; 4, 5) respectively welded on the top and bottom of the median or bottom plate, the latter (1) extending outside the profiles (2, 3 ; 4, 5) so as to form on two opposing sides two projecting portions (8) on which welded at the four corners of this plate are blocks (12) enabling a container to be linked to other containers, **characterised in that** said blocks (12) are nested on said projecting portions (8) of the median or bottom plate (1) before being welded to the four corners of said plate, and **in that**, in the extremities of the projecting portions (8) extending outside the profiles (2, 3 ; 4, 5), the median or bottom plate with bellied edges (1) has notches or similar elements (14) cooperating outside the profiles (2, 3 ; 4, 5) and outside the passage, a wear generator, extracted products, with corresponding notches (14) of the median or bottom plate (1) of at least one adjacent container so as to box the forces resulting from the relative movements of the interconnected adjacent containers.

2. Container according to claim 1, **characterised in that** said blocks (12) have faces (12a) offering the four U-shaped profiles (2, 3 ; 4, 5) a positioning seat before being welded to the median or bottom plate (1) and **in that** the four U-shaped profiles (2, 3 ; 4, 5) are welded to these blocks.
